# EUROPEAN PATENT APPLICATION

(11) **EP 1 298 766 A1**
(43) Date of publication of application: **02.04.2003**
(21) Application number: 02256768.9
(22) Date of filing: 27.09.2002
(51) Int. Cl.: H01S 3/30, H04B 10/17

(54) **Raman amplification with multiple pump sources**

(30) Priority: 28.09.2001 US 966674
(71) Applicant: Nortel Networks Limited, St. Laurent, Quebec H4S 2A9 (CA)
(72) Inventor: Fludger, Christopher R., South Croydon, Surrey CR2 0JN (GB); Jolley, Nigel, Bishops Stortford, Hertfordshire CM234EF (GB)
(74) Representative: Tocher, Alastair James

(57) **Abstract**

A Raman optical amplifier has a plurality of pump sources (14,16,18,20,22). The outputs from at least two pump sources are modulated so as to reduce the interaction between the pump source signals in the fiber. By reducing this interaction, the tilt in the effective noise figure is reduced. In one example, the modulation involves providing the pump signals (1423nm,1444nm and 1464nm,1495nm) at different times. In another example, at least two pump sources have orthogonal polarisations which are varied over time, whilst maintaining orthogonality.

## Description

### Field of the invention

This invention relates to Raman amplifiers, and is particularly directed to problems associated with the provision of pump light to Raman amplifiers. In particular, the invention relates to Raman amplifiers with multiple pump sources.

### Background of the invention

Various rare-earth doped optical amplifiers are known, such as Erbium or Erbium-Ytterbium doped fibers, and these are used to compensate for the fiber link and splitting losses within optical communications systems. Pump light from a pump source is used to excite the dopant atoms in the fiber. Emission of energy from the excited atoms is stimulated by the incident signal, and this emission results in amplification of the signal.

The gain of rare-earth doped fibers as a function of the wavelength of the signal to be amplified typically includes a maximum gain in the form of a plateau, which provides the most useful operating region of the amplifier. It is desirable to provide a flat gain over the operating wavelength range, and various gain flattening filters are used for this purpose. However, the width of the plateau in the gain profile provides a limitation to the range of wavelengths for which the amplifier can be used.

The characteristics of practical amplifiers have lead to the definition of three wavelength bands: the S band (1450nm - 1520nm); the C band (1527nm - 1563nm); and the L band (1570nm - 1603nm). A 7nm guard band is provided between the bands. Different rare-earth dopants will provide different gain profiles, and amplifier arrangements have been proposed which place different types of amplifier in parallel, so that amplification across a broader wavelength range can be achieved.

A Raman amplifier is another known amplifier configuration. This amplifier uses conventional fiber, which is may be co- or counter-pumped to provide amplification over a wavelength range which is a function of the pump wavelength. The Raman amplifier relies upon forward or backward stimulated Raman scattering. Typically, the pump source is selected to have a wavelength of around 100nm below the wavelength over which amplification is required. This type of amplifier has the advantage that it does not attenuate signals outside the wavelength range over which amplification takes place, and can also be used amplifying a wide range of wavelengths, including the S-band.

A problem with Raman amplifiers is the need for high power pump sources. In particular, in order to obtain a flat gain profile over the wavelength range of interest (which may be any or all of the wavelength bands), multiple pump wavelengths are required, and preferably with individually selectable pump powers. Wideband distributed Raman amplification can be implemented using such multiple pump wavelengths. However, these amplifiers require a number of high power pump sources, and it may be difficult in practice to implement pump sources of the required pump wavelength and power. Furthermore, the pump wavelengths also interact with one another by the Raman effect, transferring energy from the shorter wavelength pumps to the longer wavelength pumps.

This increases the power requirement of the shorter wavelength pumps. Four wave mixing of the pump source signals also gives rise to peaks in the power spectrum at different wavelengths to the pump source wavelengths, and these four wave mixing products can lie in the signal bands, thereby causing interference.

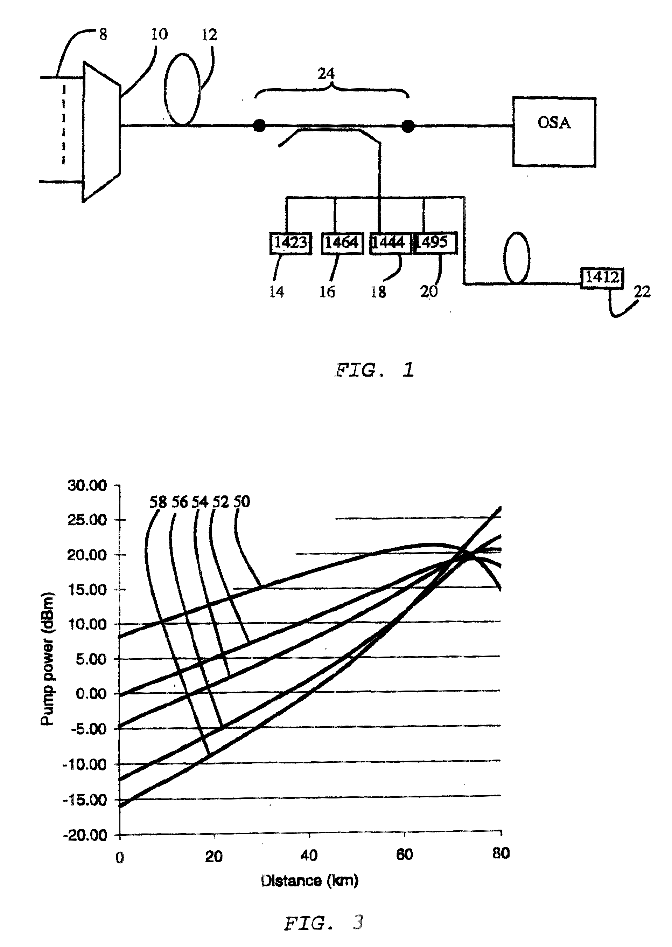

Figure 1 is a schematic diagram showing a known broadband pump amplifier, designed to produce gain over the C, L band and part of the S band. The amplifier is for amplifying multiple channels 8, which are combined onto a single carrier by a WDM multiplexer 10, for example at a node site. A distributed Raman amplifier is implemented, and the span between nodes, for example 80km of transmission fiber 12, provides the amplifying medium.

The amplifying medium 12 is provided with multiple counter-propagating Raman pump light signals from pump sources 14,16,18,20,22, and this pump light is coupled into the fiber at a WDM coupler 24. In the example shown, the pump sources have wavelengths of 1412nm, 1423nm, 1444nm, 1464nm and 1495nm. These are wavelengths for which commercially available high power laser sources are available. A high power fibre laser is used as the shortest pump wavelength (1412nm) since much of this energy is drained by the longer wavelength pumps, which may all be implemented as semiconductor lasers.

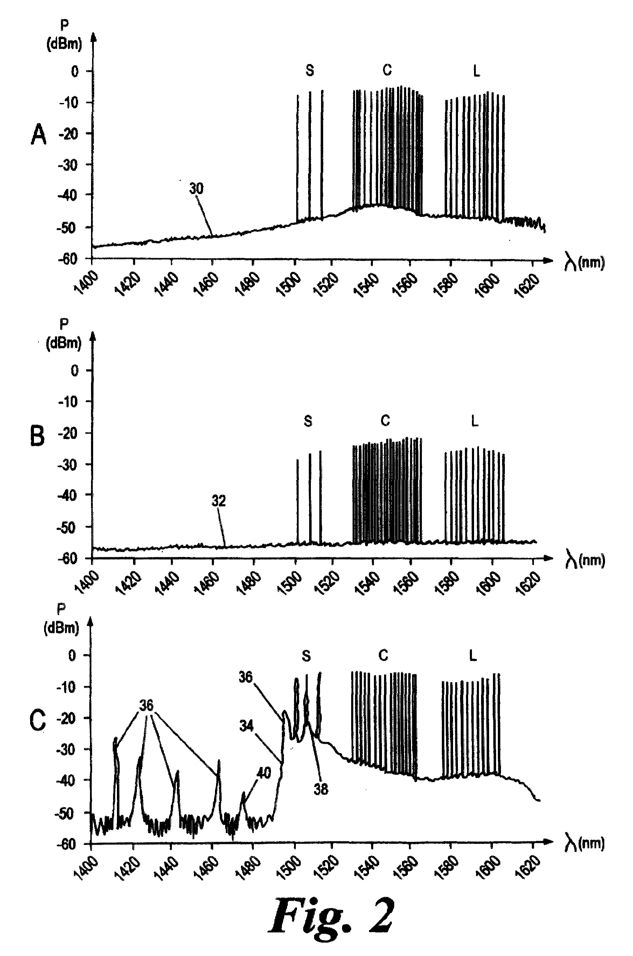

The power spectrum for the amplifier of Figure 1 is shown in Figure 2.

The power spectrum before the 80km span is represented as plot 30 in Figure 2A, which has full height power peaks in the signal bands, and low power outside of those peaks.

The plot 32 in Figure 2B represents the power spectrum at the end of the 80km span if there is no Raman amplification. The power of the signal peaks after the transmission over the fiber 12 has reduced.

When Raman amplification is used, the plot 34 in Figure 2C results at the end of the span. The pump unit is able to provide pump power to fully compensate for the loss of 80 km of fibre (about 18 dB), over a 110 nm bandwidth- because the signal peaks are restored to their original power. The peaks 36 form part of plot 34 and correspond to the pump wavelengths, which are outside the wavelength bands of interest. However, several phenomena are also visible. Firstly, some four-wave mixing (FWM) products can be seen that have been produced by the beating of the pump wavelengths. One of these products 38 can be seen under the second S-band channel (approximately 1505nm). Another, 40, appears out of the signal band, at 1475 nm. These are actually Rayleigh scattering of the FWM products (as they are propagating in the forward direction unlike the pump signals themselves), but may cause additional noise penalties if they fall in the signal band. This can be a problem for some NZ-DSF fibres such as Truewave RS and ELEAF.

Another important point is the worse noise performance, particularly in the S-band. This is due to higher fibre attenuation for both shorter wavelength signals and pumps, more thermal emission as signals approach pump wavelengths, and also the interactions between pump wavelengths.

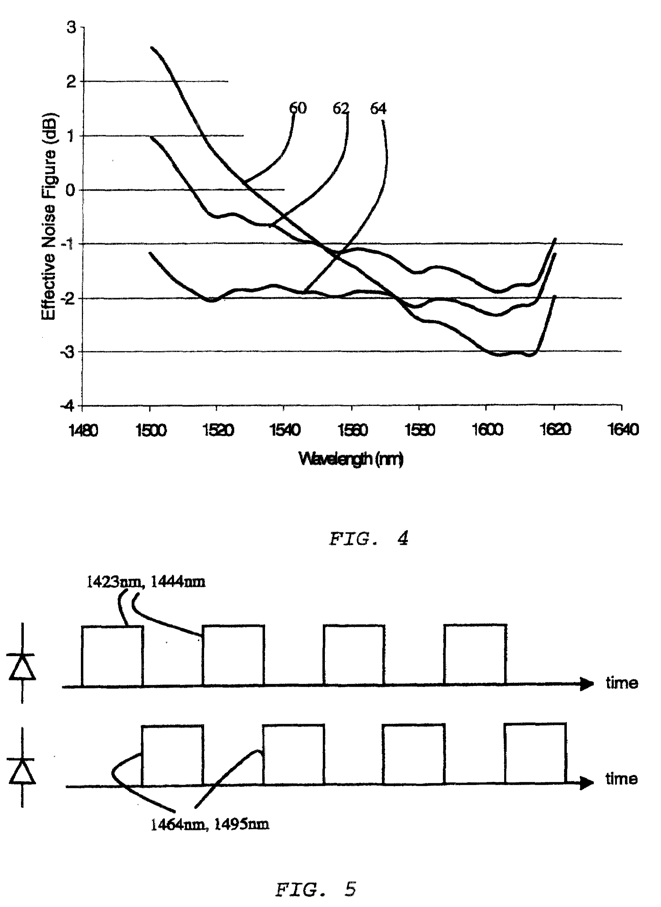

Because the Raman effect occurs between pumps as well as pumps to signals and signals to signals, the longer wavelength pumps will 'penetrate' deeper into the transmission fibre than the short wavelength pumps. The pump power profiles for the counter-pumped S,C,L band pump unit can be seen in Figure 3, which shows the pump power for the different pump sources at different positions along the 80km fiber span. The pump light travels from right to left. The plots 50, 52, 54, 56, 58 represent the 1495nm, 1464nm, 1443nm, 1423nm and 1412nm pumps, respectively. The 1495 nm pump plot 50 starts with only 20 mW of power but drains a significant amount of energy from the 1412 nm laser pump 58.

Since the longer wavelength pumps (which are for pumping in the C and L bands) penetrate more deeply than the shorter S band pumps, the effective noise figure is lower (better) in the L band.

Figure 4 shows the effective noise figure for the pump unit. Plot 60 shows the noise figure for the wavelength range of interest for the amplifier of Figure 1. There is a tilt of over 5 dB between the L band and the S band. The possible transmission span length is usually determined by the performance of the worst channel, which in this case is in the S band.

### Summary of the invention

According to the invention, there is provided a Raman optical amplifier comprising a plurality of pump sources and a coupler for coupling the pump source signals into a length of fiber, wherein the outputs from at least first and second pump sources are modulated so as to reduce the interaction between the first and second pump source signals in the fiber.

The invention is based on the recognition that the tilt in the effective noise figure results largely from interactions between pump source signals. It has been recognised by the inventors that removing the effect of the interaction between the pump wavelengths gives rise to the plot 62 in Figure 4, in which there is only 1-2 dB tilt across the band. The remaining tilt as observed in the effective noise figure is largely due to the thermal properties of the Raman effect (as signal wavelength approach pump wavelengths), and cannot be avoided. Plot 64 represents the effective noise figure modelled at absolute zero, to show that the tilt is caused by temperature dependency, whereas the ripple in the profile coincides with the peaks of the gain profile.

The invention enables the interaction between pump sources to be reduced. In particular, at least two pump sources can be modulated, and these two pump sources will be selected as those which give the worst interaction. For example the first pump source may comprise the smallest wavelength pump source (for example 1412nm or 1423nm) and the second pump source may comprise the longest wavelength pump source (for example 1495nm). The invention enables a more equal effective noise figure to be achieved over all channel wavelengths, which enables a maximum span between regeneration sites to be achieved in longhaul transmission systems.

In one embodiment, the outputs from the first and second pump sources are provided at alternating times, so that interaction is avoided by temporal control. This gives the pump source outputs a periodic output waveform, and the frequency of the modulated output signal of the first and second pump sources is preferably between 1 and 1 GHz depending on the fiber dispersion. This band of wavelengths is sufficiently high that the oscillations are not seen by the signal (because the energy transfer characteristic of the fiber has a cut off frequency) whereas the band of wavelengths is low enough that the dispersion between the pumps (which increases with frequency difference between the pumps) is not too great.

Alternatively, the outputs from the first and second pump sources may be provided with orthogonal polarizations. The Raman effect is heavily polarization dependent, and by separating the polarizations of the pump source signals, the interaction through the Raman effect can also be reduced significantly. This enables only two states of modulation, so that if multiple pump sources are used, they are provided with one or other polarization, to minimize the undesirable interactions.

The polarizations of the outputs of the first and second pump sources may be varied over time, whilst maintaining orthogonality, so that the gain response of the amplifier is not dependent on the launch state of polarization of the input signal being amplified.

The plurality of pump sources may comprise a first fiber laser for the shortest wavelength and at least two semiconductor lasers for other wavelengths. The fiber laser may be continuous, with the outputs from the at least two semiconductor lasers being provided at different times, and possibly with different duty cycles.

Alternatively, all pumps may be semiconductor lasers or other laser sources.

The amplifier may be pumped with first order pump sourced only. Alternatively, some second order pump sources may be used. Thus, the first pump source may have an output wavelength for providing first order Raman amplification of a signal band of interest, and the second pump source may have an output wavelength for providing second order Raman amplification of the signal band of interest. This enables the pump signals to penetrate deeper into the fiber. One of the first and second pump sources may provide a continuous output and the other of the first and second pump source may provide a time-modulated output. Alternatively, the first and second pump source outputs are provided at different times.

The invention also provides a Raman optical amplifier comprising a plurality of pump sources and a coupler for coupling the pump source signals into a fiber, and further comprising means for modulating the outputs from at least first and second pump sources so as to reduce the interaction between the first and second pump source signals.

The amplifier may be used in an optical communications system comprising at least first and second nodes with a length of transmission fiber between the nodes, carrying WDM signals, wherein the length of transmission fiber is pumped by the plurality of pump sources.

The invention is also directed to a method by which the described apparatus operates and including method steps for carrying out every function of the apparatus.

The invention also provides a method of providing Raman amplification, comprising providing multiple Raman pump source signals into a transmission fiber, wherein at least first and second pump source signals are modulated to reduce the interaction between the signals.

The invention also provides for a system for the purposes of communications which comprises one or more instances of apparatus embodying the present invention, together with other additional apparatus.

The preferred features may be combined as appropriate, as would be apparent to a skilled person, and may be combined with any of the aspects of the invention.

### Brief description of the drawings

Examples of the invention will now be described in detail with reference to the accompanying drawings, in which:
Figure 1 shows a known multiple-pump distributed Raman amplifier;
Figure 2 shows the power spectrum at the end of the amplifier of Figure 1 and compares this with the power spectrum without amplification;
Figure 3 shows the pump power in the amplifier of Figure 1 along the length of the fiber;
Figure 4 shows the effect of pump interactions on the amplifier characteristics;
Figure 5 shows a first modulation technique according to the invention;
Figure 6 shows a second modulation technique according to the invention;
Figure 7 shows a distributed Raman amplifier according to the invention;
Figure 8 shows the power transfer characteristic from pumps to signals in NDSF fiber;
Figure 9 shows the effect of the invention on the amplifier noise characteristics; and
Figure 10 shows the effect of the invention on the power levels within the fiber.

### Detailed description

As described above, the invention is based on the recognition that the tilt in the noise figure of a Raman amplifier results largely from interactions between pump source signals. The invention therefore proposes a number of approaches for reducing the interaction between selected pump source signals, so as to flatten the noise response of the amplifier as well as enabling the suppression of four wave mixing products produced by beating between pump sources.

Figure 5 is used to explain a first modulation technique according to the invention. For the sake of simplicity, it is first assumed that there are two pump source wavelengths for which interaction is to be avoided.

The two plots in Figure 5 represent the timing at which the two pump source signals are provided to the transmission fiber. As shown, the outputs from the two pump sources are provided at alternating times, so that interaction is avoided, effectively by time division multiplexing the two pump source signals.

This modulation technique may be applied to the amplifier configuration shown in Figure 1, and may in particular be used to reduce the interaction between the 1423nm pump source and the 1495nm pump source. Modulation of the output of the fiber laser 1412nm pump source is more difficult to implement, and the modulation scheme shown in Figure 5 will typically be applied to the semiconductor laser pump sources only.

In Figure 5, the two modulated pump source outputs are provided with equal, 50%, duty cycle. However, this is not essential and different duty cycles may be selected. As shown in Figure 5, one of the modulation schemes may be applied to both the 1423nm and 1444nm pump sources, and the other modulation scheme may be applied to both the 1464nm and 1495nm pump sources. This avoids the worst interactions between pump sources whilst maintaining a high average pump source power. As will be appreciated by those skilled in the art, the modulation of the pump source output requires an increased peak pump power to maintain a desired average power level. Consequently, the duty cycle and peak pump power will be selected in combination to achieve a desired compromise between the pump power required and the reduction in interaction between pump source signals.

Although pump sources may be grouped in the manner explained with reference to Figure 5, it is equally possible for all of the semiconductor laser pumps to be operated at different times, for example each of the four pump sources 14, 16, 18, 20 being operated with a 25% duty cycle. It is, of course, equally possible to modulate the output of the fiber laser 22, for example operating all five pump sources with a 20% duty cycle.

The specific pump source arrangement will be selected depending upon the amplifier requirements, and there may be as few as two pump sources, or there may be more than the five illustrated in Figure 1. Those skilled in the art will appreciate that each specific combination of pump source wavelengths will give rise to different possible implementations of the invention, with different pump sources being grouped together for operation simultaneously and with different duty cycles, selected in dependence upon the pump source signal interactions to be avoided. All of these possibilities are intended to be within the scope of this invention.

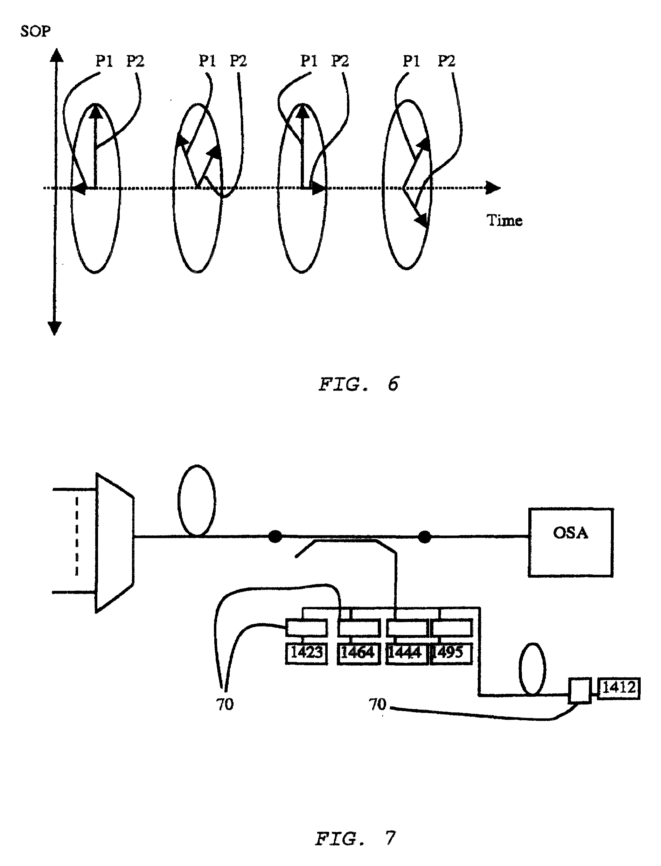

The control scheme explained with reference to Figure 5 provides separation in time of the application of pump source signals. An alternative is to provide two different sets of pump sources with orthogonal polarizations. Figure 6 represents the state of polarization "SOP" of two groups of pump sources P1 and P2. At any point in time, the states of polarization of the two groups of pump sources are orthogonal. However, the polarizations are also varied over time, so that the response of the amplifier is not dependent upon the launch state of the signal into the fiber. By arranging two groups of pump sources to have orthogonal polarizations, the interaction between the two groups through the Raman effect is also significantly reduced. Whilst this scheme only enables two different modulation schemes, so that all pump sources must fall within one of the two modulation schemes, it does enable continuous application of all pump source signals, thereby reducing the peak power requirement for the pump sources.

In order to implement the modulation schemes of Figures 5 and 6, the output of the pump sources simply needs to be modified, and as shown in Figure 7, this is achieved by providing modulation means 70 at the output of each pump source. This modulation means will either comprise a polarization controller for controlling the state of polarization, or else will comprise a timing device for selectively switching the output on or off. Although a separate modulation means 70 is shown in Figure 7, the pumps may in fact be directly modulated for the timing version, so that the modulation means 70 effectively comprises part of the pump source control circuitry.

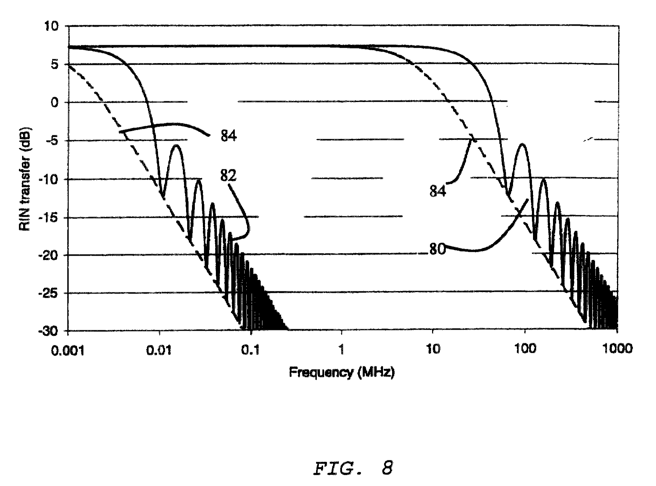

When the modulation scheme is based on timing, as shown in Figure 5, the modulated output of the pump sources comprises a periodic signal, and the frequency of this periodic signal is important. In particular, the modulation on the pumps must not transfer noise to the signals. In a counter-pumped configuration, the signal sees pump light that is averaged over the effective length of the amplifier. Figure 8 shows the energy transfer characteristics for co-pumped Raman amplifiers (plot 80) and for counter-pumped Raman amplifiers (plot 82). In each case, the transfer of pump power to the signal attenuates with increasing frequency. For the counter-pumped configuration, the attenuation arises at lower frequencies than for the co-pumped configuration. The dotted line 84 represents the averaging effect arising for long lengths of fiber, as in distributed Raman amplifiers. It can be seen from Figure 8 that there is a large amount of suppression of noise for the counter-pumped configuration when the signal frequency is of the order of MHz, for example 1MHz - 1GHz.

In addition, the modulation rate needs to be chosen so that dispersion does not spread the pump pulses over each other, over the effective length of the fiber. This imposes a maximum modulation frequency which depends upon the fiber characteristics. For example, non-dispersion shifted fiber (NDSF) has a dispersion of approximately 15ps/nm/km with the result that pulse interaction will occur at frequencies above about 25MHz for the lengths of fiber of interest. Other fiber types, for example low dispersion fiber (NZ-DSF or DSF) can allow modulation rates of up to 1GHz. The modulation rate should therefore be below the maximum level appropriate for the particular fiber.

The invention enables a distributed Raman amplifier, for example a counter-pumped Raman amplifier, to produce improved performance across a large wavelength band by removing the interaction between pump wavelengths. Four-wave mixing between pumps is also suppressed by avoiding interaction between specific pump wavelengths.

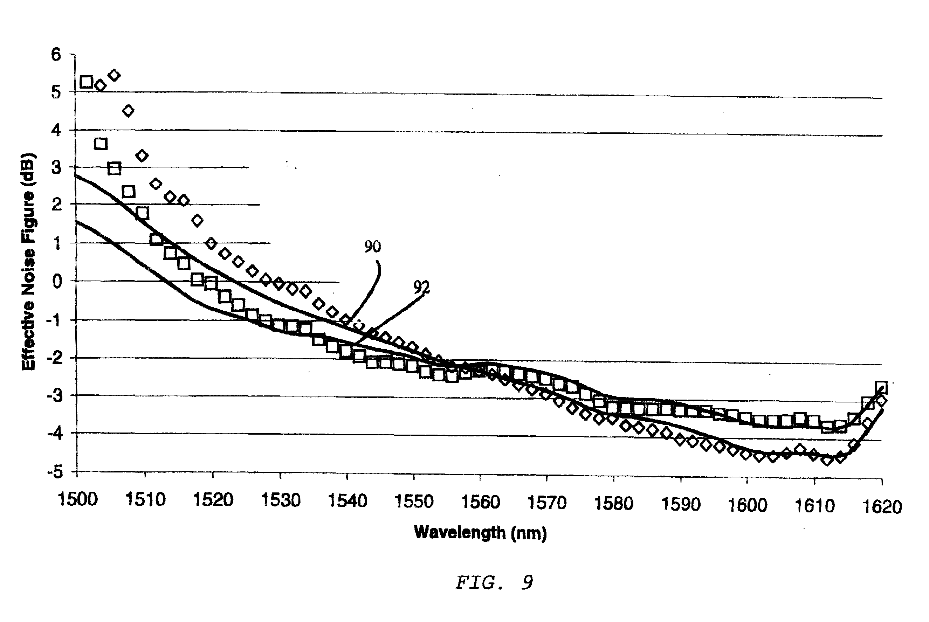

Figure 9 illustrates the effect of the modulation scheme of the invention on the effective noise figure of the amplifier. Plot 90 represents the effective noise figure for the conventional amplifier of Figure 1 and plot 92 represents the change in amplifier performance when the modulation scheme is applied to the same wavelength pumps. It can be seen that the noise figure is reduced at lower wavelengths (the S-band), although at the expense of slightly worsened noise performance at higher wavelengths. However, as mentioned above, systems have to be designed taking into account the worst noise figure over the band of interest, and the modulation scheme of the invention provides a significant improvement.

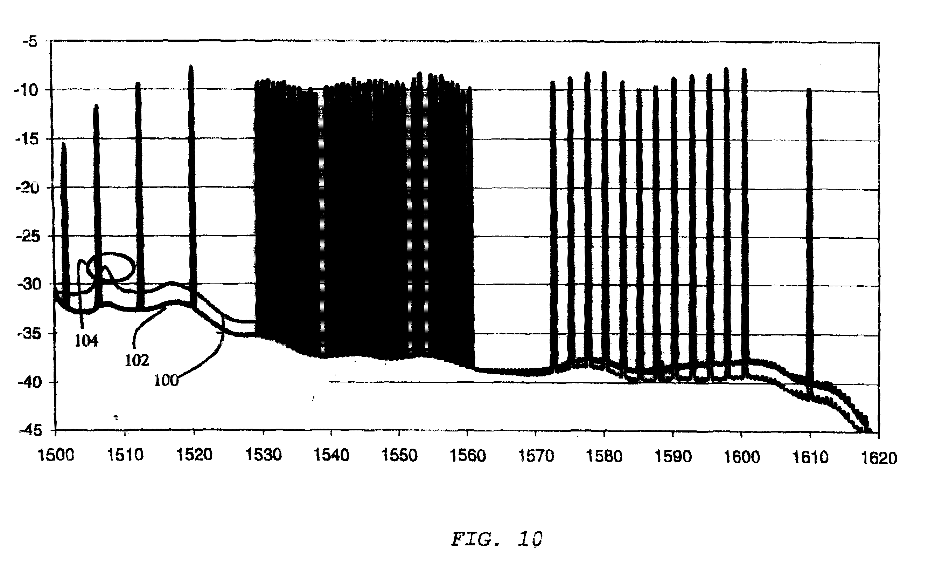

Figure 10 shows how the scheme of the invention suppresses the four-wave mixing products. Plot 100 shows the power in the fiber at the end of the span for the conventional Raman amplifier of Figure 1, and plot 102 shows the change in power resulting from use of the modulation scheme of the invention. The four-wave mixing product 104, which corresponds to the peak 38 in Figure 2, is suppressed by the scheme of the invention.

By reducing the pump interactions, the pump efficiency can also be improved, particularly for the shorter wavelength pumps, as less of the pump power is drained into the longer wavelength pumps. The table below shows the pump powers (in mW) for a conventional amplifier using the pump wavelengths of the system described with reference to Figure 1, and shows the pump powers which may be required for the same pump sources when implementing the modulation scheme of the invention. In particular, the table assumes that the 1423nm and 1444nm pump sources are grouped and that the 1464nm and 1495nm pump sources are grouped, forming two timing signals each with a 50% duty cycle, as shown in Figure 5. The 1412nm pump source is assumed to remain continuous.

| | **1412** | **1423** | **1444** | **1464** | **1495** |
|---|---|---|---|---|---|
| **Conventional** | 480 | 250 | 150 | 70 | 20 |
| **Modulated** | 450 | 150 | 100 | 160 | 125 |

Approximately the same total pump power is used in both cases to achieve the same gain. However, this is much more evenly distributed amongst the individual pumps.

Further schemes may be devised using second order pump wavelengths where each second order pump wavelength is designed to allow the first order pumps to penetrate deeper into the transmission fibre. This enables the amplifier gain to be provided nearer to the middle of a fiber span.

For this purpose, a second order pump will have a wavelength two Raman shifts below the signal level to be amplified, and the first order pump will have a wavelength one Raman shift below the signal level to be amplified. The pump power of the first order pump is then reduced, so that amplification is induced deeper into the fiber, only after the second order pump has interacted with the first order pump, and the amplified first order pump has then interacted with the signal.

This type of scheme still requires the overall gain of the amplifier to be maintained within limits, to avoid multipath interference due to double Rayleigh scattering. This can require extremely low pump powers for the first order pump source (for example microwatts), which may be difficult to implement in practice. The modulation scheme of the invention can be used to reduce the interaction between the first and second order pump sources so as to allow an increase in the pump power of the first order pump source.

As one example, the second order pump source may be a continuous wave laser source, and the first order pump source may then be temporally modulated to reduce the interaction between the first and second order pump sources, and thus enable an increase peak power for the first order pump for a given overall gain figure.

The timing scheme also enables the second order pump wavelengths to be synchronised with one or other of the first order pump wavelengths so that only the required first order pump receives gain.

The invention may be applied to distributed Raman amplifiers, in which the amplification takes place in a long span of transmission fiber. In the examples above, an 80km span of transmission fiber is used as the amplifying medium. Of course, any length of fiber may be used. The invention may also be applied to discrete Raman amplifiers in which the fiber is selected specifically for the amplifier alone.

Whilst two possible modulation schemes have been outlined, based on temporal and polarization separation, other schemes may be possible. The invention is based on the recognition that pump signal interaction should be avoided, and any modulation scheme which achieves this may be appropriate.

Any range or device value given herein may be extended or altered without losing the effect sought, as will be apparent to the skilled person for an understanding of the teachings herein.

## Claims

1. A Raman optical amplifier comprising a plurality of pump sources 14, 16, 18, 20, 22 and a coupler 24 for coupling the pump source signals into a length of fiber, **characterised in that** the outputs from at least first and second pump sources are modulated 70 so as to reduce the interaction between the first and second pump source signals in the fiber.

2. An amplifier as claimed in claim 1, wherein the outputs from the first and second pump sources are provided at alternating times.

3. An amplifier as claimed in any one of claims 1-2, wherein the frequency of the modulated output signal of the first and second pump sources is between 1 and 10MHz.

4. An amplifier as claimed in claim 1, wherein the outputs from the first and second pump sources are provided with orthogonal polarizations.

5. An amplifier as claimed in claim 4, wherein the polarizations of the outputs of the first and second pump sources are varied over time, whilst maintaining orthogonality.

6. An amplifier as claimed in any one of claims 1-5, wherein the plurality of pump sources comprise a first fiber laser and at least two semiconductor lasers.

7. An amplifier as claimed in claim 6, wherein the output from the first fiber laser is continuous, and the outputs from the at least two semiconductor lasers are provided at different times.

8. An amplifier as claimed in any one of claims 6-7, wherein the at least two semiconductor laser outputs are provided with different duty cycles.

9. An amplifier as claimed in claim 6, wherein the outputs from the first fiber laser and at least one of the semiconductor lasers are provided with first polarization, and the outputs of the other semiconductor lasers are provided with second, orthogonal polarization.

10. An amplifier as claimed in any one of claims 1-9, wherein the first pump source has an output wavelength for providing first order Raman amplification of a signal band of interest, and the second pump source has an output wavelength for providing second order Raman amplification of the signal band of interest.

11. An amplifier as claimed in claim 10, wherein one of the first and second pump sources provides a continuous output and the other of the first and second pump source provides a time-modulated output.

12. An amplifier as claimed in claim 10, wherein the first and second pump source outputs are provided at different times.

13. An optical communications system comprising at least first and second nodes with a length of transmission fiber between the nodes, carrying WDM signals, wherein the length of transmission fiber comprising an amplifier according to any one of claims 1-12.

14. A method of providing distributed Raman amplification, comprising providing multiple Raman pump source signals 14, 16, 18, 20, 22 into a fiber, **characterised in that** at least first and second pump source signals are modulated 70 to reduce the interaction between the signals.

15. A method as claimed in claim 14, wherein the modulation comprises providing the first and second pump source signals at different times.

16. A method as claimed in any one of claims 14-15, wherein the modulation comprises providing the first and second pump source signals with orthogonal polarizations.

17. A method as claimed in claim 16, further comprising varying the polarizations of the outputs of the first and second pump sources over time.
